(19) Europäisches Patentamt
European Patent Office
Office européen des brevets

(11) Publication number : **0 516 417 A1**

(12) # EUROPEAN PATENT APPLICATION

(21) Application number : **92304845.8**

(22) Date of filing : **28.05.92**

(51) Int. Cl.$^5$ : **H01M 8/12**, H01M 8/24, C25B 1/04

(30) Priority : **30.05.91 JP 127883/91**
**30.01.92 JP 14808/92**
**12.07.91 JP 172012/91**

(43) Date of publication of application :
**02.12.92 Bulletin 92/49**

(84) Designated Contracting States :
**CH DE FR GB LI**

(71) Applicant : **MITSUBISHI JUKOGYO KABUSHIKI KAISHA**
**5-1, Marunouchi 2-chome Chiyoda-ku**
**Tokyo (JP)**

(72) Inventor : **Uchida, Satoshi, c/o Nagasaki Shipyard & Eng.Works**
**Mitsubishi Jukogyo K.K., 1-1, Akunoura-machi**
**Nagasaki, Nagasaki Pref. (JP)**
Inventor : **Hisatome, Nagao, c/o Nagasaki Shipyard & Eng.Works**
**Mitsubishi Jukogyo K.K., 1-1, Akunoura-machi**
**Nagasaki, Nagasaki Pref. (JP)**
Inventor : **Araki, Tadayoshi, c/o Nagasaki Shipyard & Eng.Wrks**
**Mitsubishi Jukogyo K.K., 1-1, Akunoura-machi**
**Nagasaki, Nagasaki Pref. (JP)**
Inventor : **Ikeda, Koji, c/o Nagasaki Shipyard & Eng. Works**
**Mitsubishi Jukogyo K.K., 1-1, Akunoura-machi**
**Nagasaki, Nagasaki Pref. (JP)**
Inventor : **Nagata, Katsumi, c/o Nagasaki Shipyard & Eng.Works**
**Mitsubishi Jukogyo K.K., 1-1, Akunoura-machi**
**Nagasaki, Nagasaki Pref. (JP)**
Inventor : **Sasai, Tetsuichi c/o Nagasaki Shipyard & Eng.Works**
**Mitsubishi Jukogyo K.K., 1-1, Akunoura-machi**
**Nagasaki, Nagasaki Pref. (JP)**
Inventor : **Notomi, Akira, c/o Nagasaki Technical Institute**
**Mitsubishi Jukogyo K.K., 717-1, Fukahori-machi**
**5-chome, Nagasaki, Nagasaki Pref. (JP)**
Inventor : **Yamauchi, Yasuhiro,c/o Nagasaki Technical Inst.**
**Mitsubishi Jukogyo K.K., 717-1, Fukahori-machi**
**5-chome, Nagasaki, Nagasaki Pref. (JP)**

(74) Representative : **Lawson, David Glynne et al**
**MARKS & CLERK 57-60 Lincoln's Inn Fields**
**London WC2A 3LS (GB)**

(54) **Solid electrolyte fuel cell.**

(57) A solid oxide fuel cell comprises an insulating layer (1a) formed on a base tube (1) or a base tube (1) itself having electrically insulating properties, and a generating layer formed by successively laminating a fuel electrode (2), a solid electrolyte (3) and an air electrode (5) on the insulating layer (1a), in which fuel cell a chemically stable reaction-preventive film is preferably formed between the insulating layer (1c) or the insulating base tube (1) and the fuel layer, and which fuel cell is preferably heat treated. Also, a solid oxide fuel cell may comprise a ceramic base (21),a fuel electrode material (22) and an electrolyte material (23) thermal-sprayed and sintered on the ceramic base member (21), and an air electrode material (24) thermal-sprayed on the fuel electrode material (22) and the electrolyte material (23).

FIG. 1

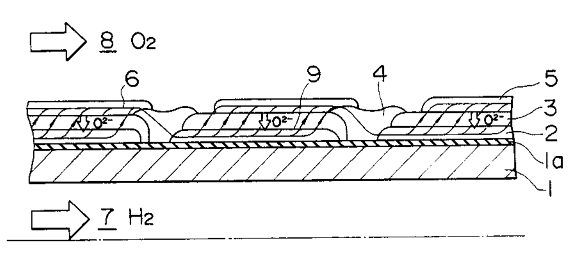


EP 0 516 417 A1

## BACKGROUND OF THE INVENTION

1. Field of the Invention

The present invention relates to a solid oxide fuel cell (SOFC). It may also be applied to a solid oxide steam electrolysis (SOSE).

2. Description of the Related Art

A conventional cylindrical solid oxide fuel cell is shown in Figs. 13 and 14. Fig. 13 shows a partial section of the cylindrical solid oxide fuel cell, mainly its electrode structure. This cylindrical solid oxide fuel cell is constituted by forming a generating layer comprising the laminated layers of a fuel electrode 2, a solid electrolyte 3 and an air electrode 5 on the outer surface of a base tube 1, and then by connecting them with an interconnector 4.

That is, on the outer surface of the cylindrical ceramic base tube 1, the fuel electrode 2 is circularly formed by thermal spraying or the like, and the solid electrolyte 3 is further circularly formed and superposed upon the fuel electrode 2. The base tube 1 is made of calcia-stabilized zirconia (CSZ), the fuel electrode 2 is made of nickel (Ni) or a cermet of nickel and yttria-stabilized zirconia (YSZ), and the solid electrolyte 3 is made of yttria-stabilized zirconia.

The interconnector 4 is disposed between the fuel electrode 2 and the solid electrolyte 3 adjacent to it, and the air electrode 5 is circularly formed and superposed on the interconnector 4 and the solid electrolyte 3. The interconnector 4 electrically connects the air electrode 5 formed thereon to the adjacent fuel electrode 2. The interconnector 4 is made of nickel (Ni) or a cermet of nickel and ceramics, and the air electrode 5 is made of a lanthanum compound such as a lanthanum-cobalt compound ($LaCoO_3$ or the like).

A fuel 7 such as hydrogen is fed to the inside of the base tube 1, and an oxidizing agent 8 such as air or oxygen is fed to the air electrode 5 on the outer surface of the base tube 1. Then, oxygen ions ($O^{2-}$) move in the electrolyte at operation temperatures of from 900 to 1000°C, to generate electricity.

Fig. 14 shows how the cylindrical solid oxide fuel cell operates. As shown in this figure, the oxygen ions which received electrons at the air electrode 5 pass through the solid electrolyte 3 and then react with hydrogen at the fuel electrode 2 to produce water ($H_2O$) and release the electrons. Furthermore, a current 6 flows from the fuel electrode 2 through the solid electrolyte 3, the air electrode 5 and the interconnector 4 to the adjacent fuel electrode 2, as indicated by arrows in Fig. 15.

Fig. 16 shows a structural view in which a conventional cylindrical solid oxide fuel cell is formed as a module. As shown in this figure, a cell tube 10 is supported by a lower tube plate 12, and a fuel injection tube 11 is supported by an upper tube plate 14 and inserted into the cell tube 10. The cell tube 10 comprises the base tube 1, the respective electrode elements, and the like as described above, and a fuel 17 such as hydrogen ($H_2$) is fed to the cell tube 10 through the fuel injection tube 11.

Between the lower tube plate 12 and the upper tube plate 14, there is defined a fuel discharge chamber 13 into which an exhaust fuel gas 16 not consumed in the cell tube 10 is discharged. An oxidizing agent 8 such as air or oxygen ($O_2$) is fed to a region under the lower tube plate 12 and outside the cell tube 10, and electricity is thus generated and then collected by a current lead wire not shown.

Also, the electrodes of solid oxide fuel cells have been formed by thermal spraying, EVD (electro-chemical vapor deposition) or sintering.

For example, in the case of thermal spraying, a fuel cell is manufactured by supplying a powder for each cell element into a plasma or burning flame to form a coating film on a base tube or plate in a predetermined order.

According to a method which uses EVD, a fuel cell is manufactured by chemically depositing gases for the respective elements on the base plate in the gaseous phase so as to form films.

In the case of sintering, in order to manufacture a fuel cell, slurries are prepared from powders for the respective elements, and thin films, so-called green sheets, are then arranged in a predetermined structure and sintered in a high-temperature atmosphere.

However, the conventional solid oxide fuel cell has the following problems.

(a) Since the conventional solid oxide fuel cell runs at high temperatures of about 900 to 1000°C, the base tube 1 cannot be a perfect insulator at such high temperatures, though it is made of a material having higher electrical resistance than the electrolyte 3. For this reason, it is presumed that a weak micro-current 6a flows through the base tube 1, as indicated by broken lines in Fig. 14, and this inconveniently accelerates the decrease of efficiency and the deterioration of the base tube.

(b) If the supply of hydrogen ($H_2$) 7 becomes insufficient while the cylindrical solid oxide fuel cell is operating, the interface between the fuel electrode 2 and the solid electrolyte 3 is oxidized with the $O^{2-}$ ions coming from the air electrode 5, and this oxidation results in the formation of a film 9 comprising a material having high electrical resistance, as shown in Fig. 15. On the other hand, because the current is forced to flow, a by-pass current 6b flows through the base tube 1, as indicated by solid lines each having an arrow in Fig. 15. In consequence, the base tube 1 becomes damaged at portions overlapping with the fuel electrode 2.

Furthermore, the present inventors have confirmed that in the case of such a cylindrical solid oxide fuel cell module as shown in Fig. 16, if the supply of the fuel 17 is not sufficient in a region downstream in the flow of the fuel 17 (the upper portion of the cell tube in Fig. 16), the above-mentioned condition appears and the cell tube 10 may break.

(c) Moreover, the present inventors have also confirmed that in the case of such a module structure as shown in Fig. 16, when the fuel injection pipe 11 is a good conductor and the fuel injection tube 11 comes into contact with the inner surface of the cell tube 10 because of thermal strain or inaccurate construction, a conduction (discharge) phenomenon 19 occurs at such a contact point as shown in Fig. 17, causing the breakage of the cell tube 10.

(d) As for the method of forming the electrode elements, the most important feature of thermal spraying is that the cell elements can be easily formed, but powders do not melt completely during the thermal spraying, so that films are not dense and a fuel gas tends to diffuse therethrough. Further, since the films are not very dense, boundary electrical resistance between the powder particles is high, so the electrical conductivities of the cell elements becomes lower than those of the elements formed by sintering or EVD.

(e) The advantage of film formation by sintering resides in high density and high electrical conductivities, but it also has a significant drawback that the formation of the cell elements is difficult. In recent years, sintered materials have been a subject of research in many countries worldwide, but this disadvantage has not been resolved yet.

(f) EVD produces elements with dense constitution, and so the elements formed by EVD generally have high electrical conductivities. However, a chlorine gas is used in manufacturing by EVD, and a very delicate and unstable manufacturing technology is required and the yield is low. In addition, the use of the highly corrosive gas inconveniently results in the corrosion of apparatuses in a relatively short period of time.

## SUMMARY OF THE INVENTION

An object of the present invention is to provide a solid oxide fuel cell in which neither the by-pass current nor the conduction phenomenon takes place.

Another object of the present invention is to provide a fuel cell having elements which can be easily formed and which are dense and have high electrical conductivity.

The present invention provides:

(1) a solid oxide fuel cell comprising an insulating layer formed on a base tube, and a generating layer formed by successively laminating a fuel electrode, a solid electrolyte and an air electrode on the insulating layer;

(2) a solid electrolyte fuel cell which comprises a generating layer formed by successively laminating a fuel electrode, a solid electrolyte and an air electrode on a base tube having high electrical insulating properties;

(3) a solid oxide fuel cell comprising an insulating layer formed on a base tube, and a generating layer formed by successively laminating a fuel electrode, a solid electrolyte and an air electrode on the insulating layer, in which fuel cell a chemically stable reaction-preventive film is preferably formed between the insulating layer and the fuel layer, and which fuel cell is preferably heat treated;

(4) a solid electrolyte fuel cell which comprises a generating layer formed by successively laminating a fuel electrode, a solid electrolyte and an air electrode on a base tube having high electrical insulating properties, and in which fuel cell a chemically stable reaction-preventive film is preferably disposed between the base tube and the fuel layer, and which fuel cell is preferably heat treated; in (3) and (4) above, as the reaction-preventive film, a thin film of yttria-stabilized zirconia or yttrium can be used;

(5) a solid oxide fuel cell which comprises a ceramic base, a fuel electrode material and an electrolyte material thermal-sprayed and sintered on the ceramic base member, and an air electrode material thermal-sprayed on the fuel electrode material and the electrolyte material; and

(6) a method for preparing a solid oxide fuel cell which comprises a first step of thermal spraying a fuel electrode material and an electrolyte material on a ceramic base material in this order, a second step of firing the ceramic base on which the fuel electrode material and the electrolyte material are thermal-sprayed, and a third step of thermal spraying an air electrode material on the fired electrolyte material.

In the present invention as described in (1) through (4) above, an insulating film having excellent electrical insulating properties is interposed between the base tube and the fuel electrode, or the base tube itself is made to have excellent electrical insulating properties. Therefore, generated electricity is prevented from flowing into the base tube, and the current flows from the fuel electrode through the solid electrolyte, the air electrode, and the interconnector to the next fuel electrode, following a path intended at the time of designing the fuel cell. Furthermore, even if a film having high resistance is formed between the fuel electrode and the solid electrolyte, a by-pass current does not flow through the base tube.

Particularly, when the cell is in the form of a module, the above-mentioned effect prevents the cell tube from being damaged or broken even if the shortage of a fuel on the downstream side of one cell tube or the uneven supply of the fuel into a plurality of cell tubes results in the formation of a film with high electric resistance between the fuel electrode and the solid electrolyte due to oxygen ions.

Furthermore, even if short circuit occurs between the cell tube and the tube plate, or even if a fuel injection tube is brought into contact with the inside of the cell tube, electric conduction (or electric discharge) in the base tube can be prevented, whereby the stability and reliability of the cell can be improved.

Moreover, even if a good conductor is brought into contact with the inside of the base tube during operation, a conduction (discharge) phenomenon does not occur between the good conductor and the fuel electrode outside the base tube, and the generated electricity flows without deviating from a designed path, and is collected.

Because the reaction-preventive film is formed under the fuel electrode, and a heat treatment can improve an open-circuit voltage and makes the electrolyte denser, resistance may be decreased by thinning the film. Consequently an improvement in performance can be expected.

Also, according to the present invention as described in (5) and (6) above, provided is a solid oxide fuel cell in which the fuel electrode material and the electrolyte material which are thermal-sprayed on the ceramic base are sintered, so as to make the particles pack more densely and therefore improve the electric conductivity of each cell element, and a method for manufacturing such a fuel cell.

Each cell element formed by thermal spraying is merely an aggregation of particles. Many unfilled spaces and gaps are present in the elements, and gas passes through the elements easily. These elements are then sintered, and as a result, the particles in each element become crushed and the interfaces of the particles come in closer contact with each other, so that the gaps among them decrease as compared with the state before sintering.

In consequence, gas molecules which pass through the films decrease to a minimum, and the increased contact area of the interfaces of the particles results in an improved electrical conductivity.

As described, the present invention provides a construction of a fuel cell and a preparation method therefor using a fuel electrode and an electrolyte materials which are thermal-sprayed for easy formation of fuel cell elements and then sintered. Therefore, a dense solid oxide fuel cell having high electrical conductivity and its preparation method without using techniques which do not allow easy formation of the cell elements and delicate and unstable manufacturing techniques, such as conventional sintering and EVD. The present invention makes it possible to improve the performance, efficiency and manufacturing efficiency of solid oxide fuel cells.

## BRIEF DESCRIPTION OF THE DRAWINGS

Fig. 1 is a structural view of the electrode structure of a cylindrical solid oxide fuel cell as an embodiment of the invention as described in (1) above;

Fig. 2 is a schematic view of another embodiment in which the embodiment in Fig. 1 is applied to a module;

Fig. 3 is a structural view of the electrode structure of a cylindrical solid oxide fuel cell as an embodiment of the invention as described in (2) above;

Fig. 4 is a schematic view of the case where a heat treatment is carried out for a cell constitution not containing any reaction-preventive film;

Fig. 5 is an explanatory view showing how performance is improved by the heat treatment;

Fig. 6 is a current-voltage (I-V) graph for a case where the heat treatment is carried out for the cell constitution shown in Fig. 4;

Fig. 7 is a view of cell constitution of an embodiment of the invention as described in (3) above;

Fig. 8 is a current-voltage (I-V) graph for a case where the heat treatment is carried out for the cell constitution in which the reaction-preventive film is provided;

Fig. 9 is an explanatory view showing a performance improvement of the cell which is expected in the present invention;

Fig. 10 is a sectional view of another embodiment of a solid oxide fuel cell of the present invention;

Fig. 11(a) is a schematic view of microscopic constitution of a cell element of the embodiment in Fig. 10 before sintering;

Fig. 11(b) is a schematic view of microscopic constitution of the cell element for the embodiment of the present invention;

Fig. 12 shows a performance curve for the embodiment of the solid oxide fuel cell of the present invention shown in Fig. 10;

Fig. 13 is a structural view of the electrode structure of a conventional cylindrical solid oxide fuel cell;

Fig. 14 is a first view showing the flow of a current of the conventional cylindrical solid oxide fuel cell;

Fig. 15 is a second view showing the flow of the current of the conventional cylindrical solid oxide fuel cell;

Fig. 16 is a structural view of a module in which the conventional cylindrical solid oxide fuel cell is used; and

Fig. 17 is a schematic view of a discharge phenomenon occurring in the module shown in Fig. 16.

## DETAILED DESCRIPTION OF THE PREFERRED EMBODIMENTS

An embodiment of the invention as described in (1) above is shown in Fig. 1.

As shown in this figure, in this embodiment, an insulating film 1a having excellent electrical insulating properties is formed on a base tube 1. That is, the insulating film 1a is formed by thermal spraying or the like on a portion of the base tube where a fuel electrode 2 and an interconnector 4 are placed, and this film 1a is also made of a porous material which has good gas permeability and insulating properties. A preferable material for the insulating film 1a is alumina ($Al_2O_3$) or the like having excellent insulating properties. With regard to the base tube 1, the fuel electrode 2, the electrolyte 3, the interconnector 4 and an air electrode 5 in Fig. 1, their constitution, function and the like are the same as in the conventional example, and thus the description about them is omitted here.

According to such construction, the current which flows through the interconnector 4 from the adjacent air electrode 5 is joined by a current generated in the fuel electrode 2, and the current thus joined flows through the solid electrolyte 3 to the air electrode 5. This flow does not get into the base tube 1, even if a film 9 having high resistance forms between the solid electrolyte 3 and the fuel electrode 2 during operation. In short, since the insulating film 1a of excellent electrical insulating properties is disposed on the base tube 1, the current 6 neither gets into nor damages the base tube 1, 1b, even when the film 9 or the like with high resistance forms at a portion through which the current 6 flows.

Furthermore, these constructions of the cylindrical solid oxide fuel cell using the insulating film 1a and the insulating base tube 1b of the present embodiment can be applied to a solid oxide steam electrolytic (SOSE) cell in which reactions run in the direction opposite to those of the fuel cell.

Fig. 2 shows an embodiment in which the cylindrical solid oxide fuel cell of the embodiment shown in Fig. 1 is applied to a module structure. In the module shown in Fig. 2, an insulating film 1c of alumina is formed, and therefore even if a metallic fuel injection tube 11 is brought into contact with the inside of a cell tube 10, no conduction (discharge) phenomenon occurs therebetween. Other constitution and function are the same as for the conventional example, and thus the description about them is omitted here.

Next, an embodiment of the present invention as described in (2) above will be explained with reference to Fig. 3.

As shown in this figure, in this embodiment, an insulating base tube 1b having excellent electrical insulating properties is used. The base tube 1b is a circular tube made of porous alumina and has higher insulating properties than conventional calcia-stabilized zirconia, while it does not prevent hydrogen ($H_2$) from moving from the inside of the base tube 1b to a fuel electrode 2.

Such a constitution prevents electric current from flowing into the base tube, as in the embodiment for (1) above shown in Fig. 1. The fuel electrode 2, the solid electrolyte 3, the interconnector 4 and the air electrode 5 in Fig. 3 are the same as in the conventional example, and thus the description about these is omitted here.

In the present embodiment, since the insulating base tube 1b having excellent electrical insulating properties is used, the current 6 does not go into the base tube 1, 1b and therefore does not damage it, even if a film 9 or the like having high electric resistance forms during operation at a portion through which the current 6 should normally flows.

Furthermore, these constructions of cylindrical solid oxide fuel cell using the insulating film 1a and the insulating base tube 1b of the present embodiment can be applied to a solid oxide steam electrolytic (SOSE) cell in which reactions run in the direction opposite to those of a fuel cell.

The electrolyte in the cylindrical solid oxide fuel cell is required to have gas tight properties, and it is preferred to carry out a heat treatment (at a thousand and several hundreds degrees Celsius) in order to make it denser. The heat treatment prevents the leakage of hydrogen ($H_2$) from the fuel electrode 22 to the air electrode 24, such as shown in Fig. 5, and therefore prevents the combustion of hydrogen ($H_2$) at the air electrode.

However, the heat treatment results in the formation of a highly resistive material 22a at an interface contact position between the fuel electrode 22 and an insulating film 27 of the base tube 21 as shown in Fig. 4. The conductivity on the fuel electrode 22 side therefore becomes reduced and a negative influence appears on cell performance. In other words, as shown in Fig. 6, if the heat treatment is carried out (as indicated by numeral 32 in the figure), the electrolyte becomes denser and an open circuit voltage is higher than a case without the heat treatment (indicated by 31). For the above-mentioned reason, however, the resistance increases ($R_7 \geq R_6$) and the cell performance does not improve.

Therefore, as shown in Fig. 7, in the embodiment for (3) above, a reaction-preventive film 22b made of a chemically stable material is placed between the insulating film 27 and the fuel electrode 22 in order to prevent the insulating film 27 formed on the ceramic base tube 21 from reacting with the fuel electrode 22 at the time of the heat treatment.

That is, the insulating film 27 of alumina ($Al_2O_3$) or the like is formed on the outer surface of the ceramic base tube 21 by thermal spraying or the like, and the reaction-preventive films 22b of yttria-stabilized zirconia (YSZ) or yttrium ($Y_2O_3$) are circularly formed at certain intervals on the insulating film 27 of this base tube 21, and also air tight films 26 are formed therebetween by thermal spraying or the like. The base tube 21 is cylindrical and made of calcia-stabilized zirconia (CSZ) or the like. The fuel electrode 22 is placed on each reaction-preventive film 22b, and the solid electrolyte 23 and the air electrode 24 are further laminated on the fuel electrode 22. In addition, an interconnector 25 for mutually connecting the solid electrolytes 23 is formed by thermal spraying or the like.

The fuel electrode 22 is made of nickel (Ni), nickel oxide (NiO) or the like. As described above, the reaction-preventive film 22b is placed under each fuel electrode 22, and the solid electrolyte 23 and the interconnector 25 are formed, and then heat treatment is carried out at temperatures of, for example, a thousand and several hundreds degrees Celsius.

As a result, the solid electrolyte 23 and the interconnector 25 become dense, so that the leakage of hydrogen ($H_2$) from the fuel side to the air side (from the $H_2$ side to the $O_2$ side) is sufficiently stopped. This makes it possible to reduce the thickness of the electrolyte film and prevents the electric resistance of the elements on the fuel side from increasing. Thus, it can be expected to enhance the performance of the cell.

In this embodiment, the reaction-preventive film 22b of a chemically stable material is placed under the fuel electrode 22, and therefore a reaction product having high electric resistance, shown in Fig. 4, is prevented from forming at the interface contact position between the fuel electrode and the insulating film during such heat treatment. In consequence, the increase of resistance due to the heat treatment can be prevented, and as shown in Fig. 8, the increase of the open circuit voltage and an improvement in the cell performance at a rated operation point may be expected. In other words, if the heat treatment is carried out (as indicated by 33) in the presence of the reaction-preventive film, the open circuit voltage becomes higher and the performance at the rated point is better than a case where no heat treatment is carried out (indicated by 31) or where only the heat treatment is performed (indicated by 32).

In addition, the denser electrolyte enables itself to be thinly formed, and this effect can be utilized advantageously. In Fig. 9, a current-voltage curve is shown for a case where the electrolyte layer is made thinner than the embodiment shown in the graph in Fig. 8. In Fig. 9, the broken line indicated by numeral 34 represents an improvement achieved by making the electrolyte layer thinner as compared with the solid curve indicated by numeral 33, which is the same as the curve 33 in Fig. 8. Smaller $R_9$ indicates a decrease of electric resistance because of a thinner electrolyte layer. Also, it should be noted that the open circuit voltage (voltage at $I$ = zero) may be slightly smaller than a case with a thicker electrolyte layer because the potential for generating electricity may be slightly smaller.

In this embodiment, the insulating film 27 is placed on the base tube 21. Instead, however, as the present invention described in (4) above, the base tube 21 itself may be made of an insulating material and the reaction-preventive film may be placed between the base tube made of the insulating material and the fuel electrode.

Another embodiment of the present invention with respect to (5) and (6) above will be described with reference to Figs. 10, 11(a) and 11(b).

Fig. 10 is a sectional view of an embodiment of a cylindrical solid oxide fuel cell of the present invention.

Referring to cell elements in this figure, a porous ceramic base tube 31 is made of calcia-stabilized zirconia (CSZ). A fuel electrode 32 is made of nickel (Ni), a cermet of nickel and YSZ, or the like. An electrolyte film 33 is made of yttria-stabilized zirconia (YSZ). An air electrode 34 is made of a lanthanum compound such as a lanthanum-cobalt compound ($LaCoO_3$ or the like). An interconnector 35 is made of nickel-aluminum, and also a protective film 36 is disposed.

If we look at the microscopic constitution of the fuel electrode and the electrolyte film which has been just thermal-sprayed on the base tube, it would appear as shown in Fig. 11(a), wherein the powder of each material is only thermal-sprayed during which the powder particles do not become completely melted, and they appear to be merely gathered, remaining in their particulate form. Therefore, many gaps and spaces are present among the particles, and boundaries among the particles are open. This leads to a high passage rate of gas through the films.

At this stage, the cell elements of the present invention are in the same condition as those made by conventional thermal spraying.

Next, the base tube on which the fuel electrode and the electrolyte film have been thermal-sprayed is placed in an electric furnace and then fired at temperatures of from 1000 to 1500°C, preferably at 1300°C, in an oxidizing or reducing atmosphere. The microscopic constitution of the thus fired materials is shown in Fig. 11(b), wherein the particles are crushed and the gaps among the particles have decreased or disappeared. The boundary surfaces of the particles adhere and are connected to each other.

Subsequently, the interconnector, the air electrode and the protective film are thermal-sprayed to obtain a plate type solid oxide cell shown in Fig. 10.

The thus obtained cylindrical solid oxide fuel cell is compared with the same type fuel cell prepared by conventional thermal spraying, and the results are set forth in Table 1.

Table 1

| | Conventional Method | Present Invention |
|---|---|---|
| Electrical Conductivity | $0.05 S \cdot cm^{-1}$ | $0.08 S \cdot cm^{-1}$ |
| Open Circuit Voltage | 1.0 Volt | 1.1 Volt |
| Diffusion Ratio | base | 1/100 |
| Heat Cycle Resistance | medial | good |
| Fuel Utilization | 60-70% | 80% |
| Voltage at $200 mA/cm^2$ | 0.5-0.6 Volt | 0.7 Volt |
| Efficiency Using Hydrogen (HHV) | about 30% | 36% |

According to the results shown in the table, the efficiency when hydrogen is used, which is one of the evaluation items most indicative of cell performance, is about 30% in the conventional cell type and 36% in the present invention, representing a 20% improvement in efficiency.

Furthermore, performance curves are shown in Fig. 12. According to Fig. 12, it is apparent that the decrease of internal resistance (i.e., adhesion among the interfaces of the particles) leads to a result that a curve 38 for the present invention is at a higher voltage level than a curve 39 for the conventional thermal spraying technique.

Also, while the solid oxide fuel cell of this embodiment is cylindrical, the above-mentioned results have been shown to equally apply to a plate type fuel cell.

According to this embodiment, the particles in each cell element become dense as shown in Fig. 11(b), reducing the internal resistance and improving performance. Moreover, in contrast to fuel cells made by sintering, the formation of the respective elements is easy, and the density and electrical conductivity of the cell elements can be improved without using such a delicate and unstable manufacturing technology as EVD.

## Claims

1. A solid oxide fuel cell, comprising an electrically insulating layer formed on a base tube, and a generating layer formed by successively laminating a fuel electrode, a solid electrolyte and an air electrode on said insulating layer.

2. A solid oxide fuel cell, comprising a base tube having electrically highly insulating properties, and a generating layer formed by successively laminating a fuel electrode, a solid electrolyte and an air electrode on said base tube.

3. A solid oxide fuel cell of claim 1, wherein a chemically stable reaction-preventive film is disposed between said insulating layer and said fuel electrode layer, and said fuel cell is heat treated.

4. A solid oxide fuel cell of claim 1, wherein a thin film of yttrium or yttria-stabilized zirconia is disposed between said insulating layer and said fuel electrode layer, and said fuel cell is heat treated.

5. A solid oxide fuel cell, comprising a base tube having electrically highly insulating properties, and a generating layer formed by successively laminating a fuel electrode, a solid electrolyte and an air electrode on said base tube.

6. A solid oxide fuel cell of claim 5, wherein a chemically stable reaction-preventive film is disposed between said base tube and said fuel electrode, and said fuel cell is heat treated.

7. A solid oxide fuel cell of claim 6, wherein said reaction-preventive film is a thin film of yttrium or yttria-stabilized zirconia.

8. A solid oxide fuel cell which comprises a base tube, an insulating film and a fuel electrode and a solid electrolyte thermal-sprayed onto said base tube and sintered, and an air electrode thermal-sprayed onto said fuel electrode and said solid electrolyte.

9. A method for preparing a solid oxide fuel cell, comprising a first step of thermal spraying first an electrically insulating layer, then a fuel electrode and subsequently a solid electrolyte onto a base, a second step of firing said base on which said insulating material, said fuel electrode material, and said electrolyte material have been thermal-sprayed, and a third step of thermal spraying an air electrode material on said fired electrolyte material.

10. A solid oxide fuel cell substantially as herein described with reference to any one of Figures 1, 2 and 3 or Figures 10, 11(a) and 11(b) of the accompanying drawings.

11. A method of preparing a solid oxide fuel cell according to claim 9 and substantially as herein described.

FIG. 1

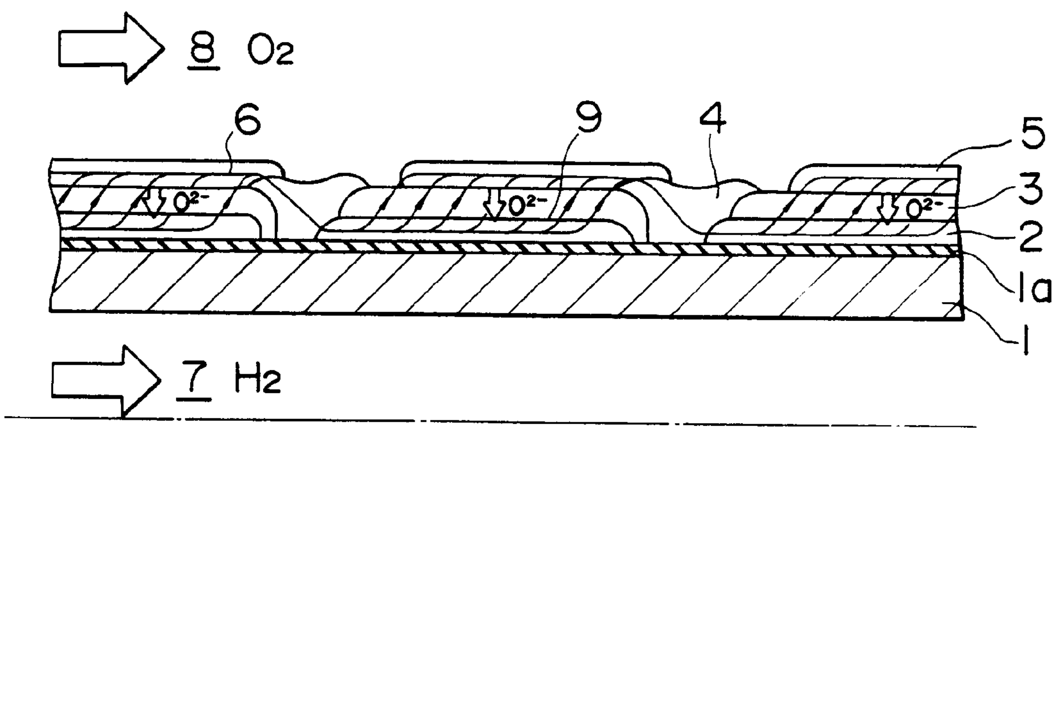

FIG. 2

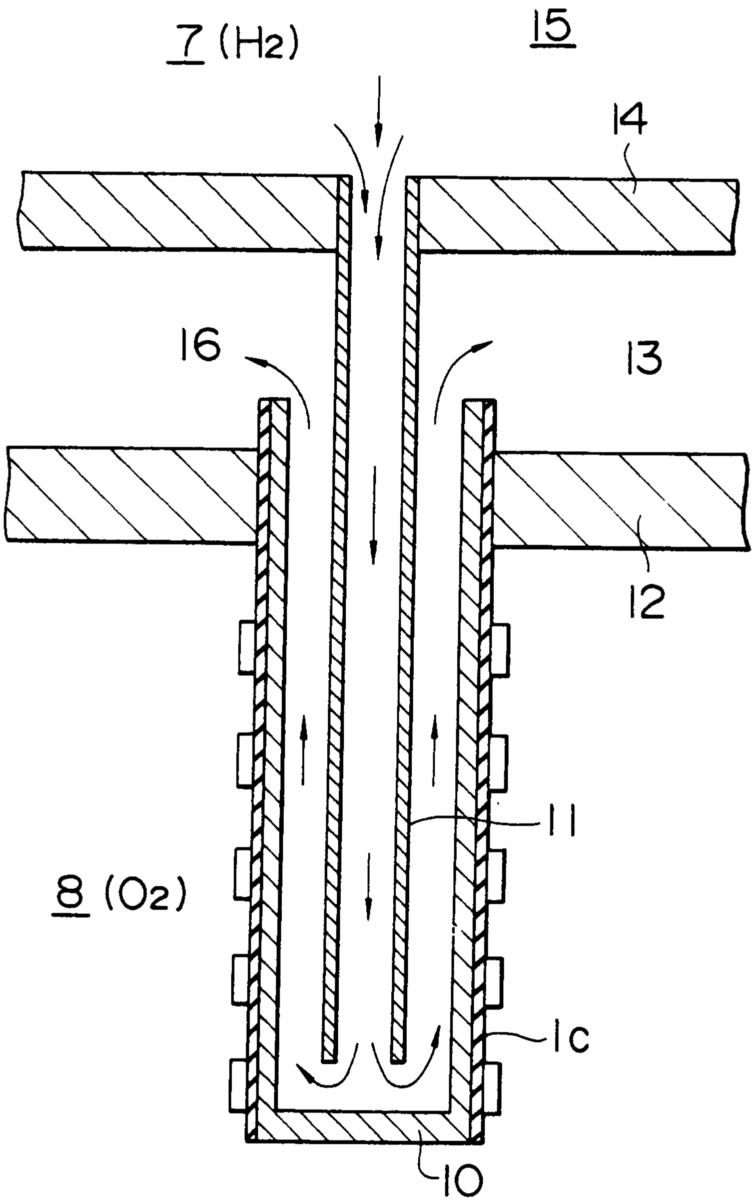

F I G. 3

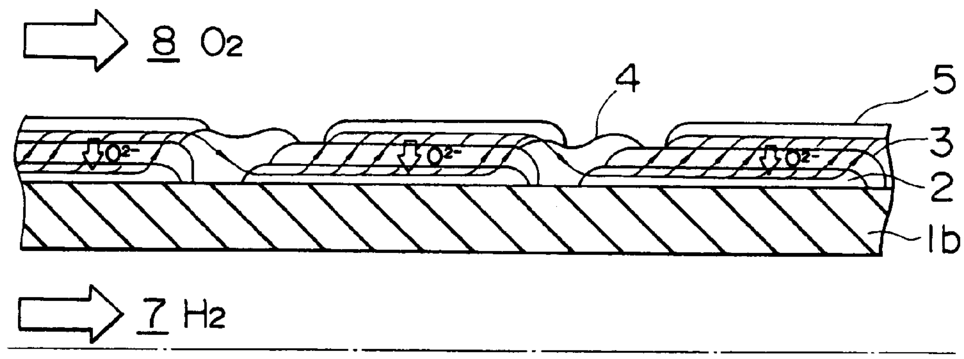
8 O2
4
5
O2-
O2-
O2-
3
2
1b
7 H2

F I G. 4

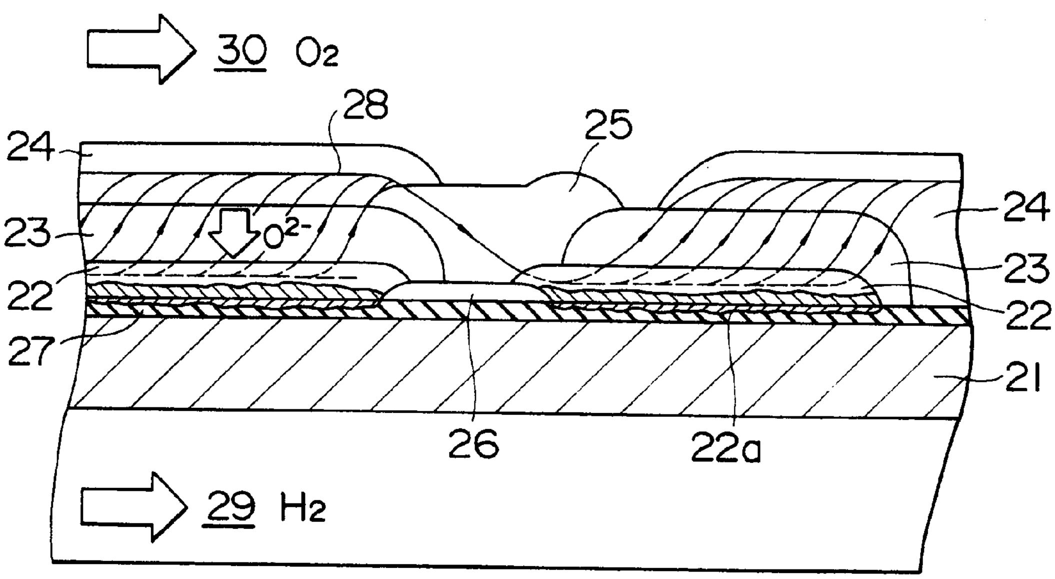
30 O2
28
25
24
24
23
O2-
23
22
22
27
21
26
22a
29 H2

FIG. 5

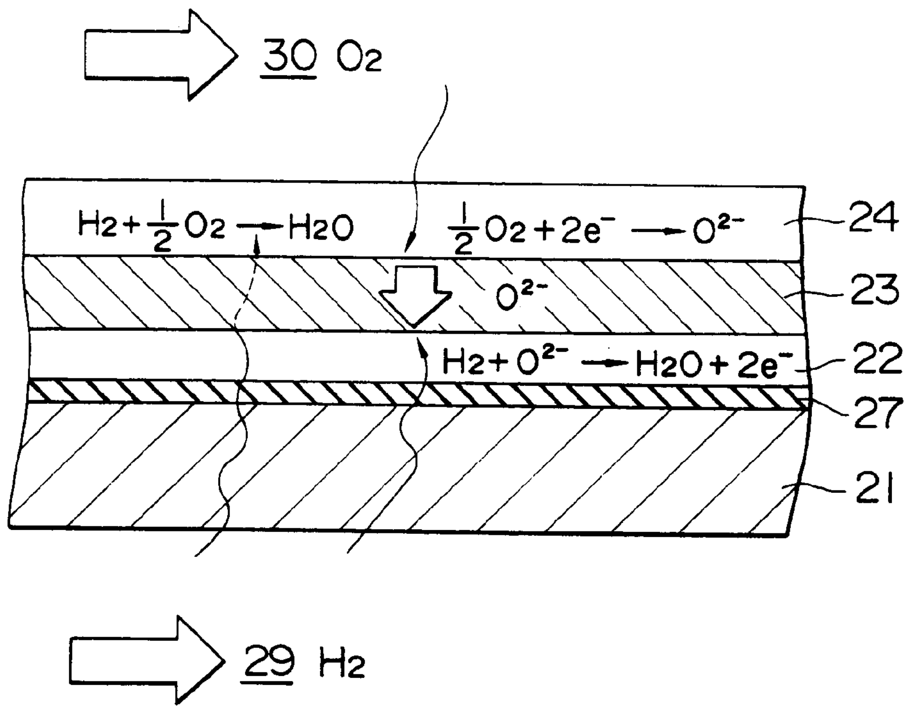
30 O2
H2+1/2O2 → H2O
1/2O2+2e⁻ → O2⁻
O2⁻
H2+O2⁻ → H2O+2e⁻
24
23
22
27
21
29 H2

FIG. 6

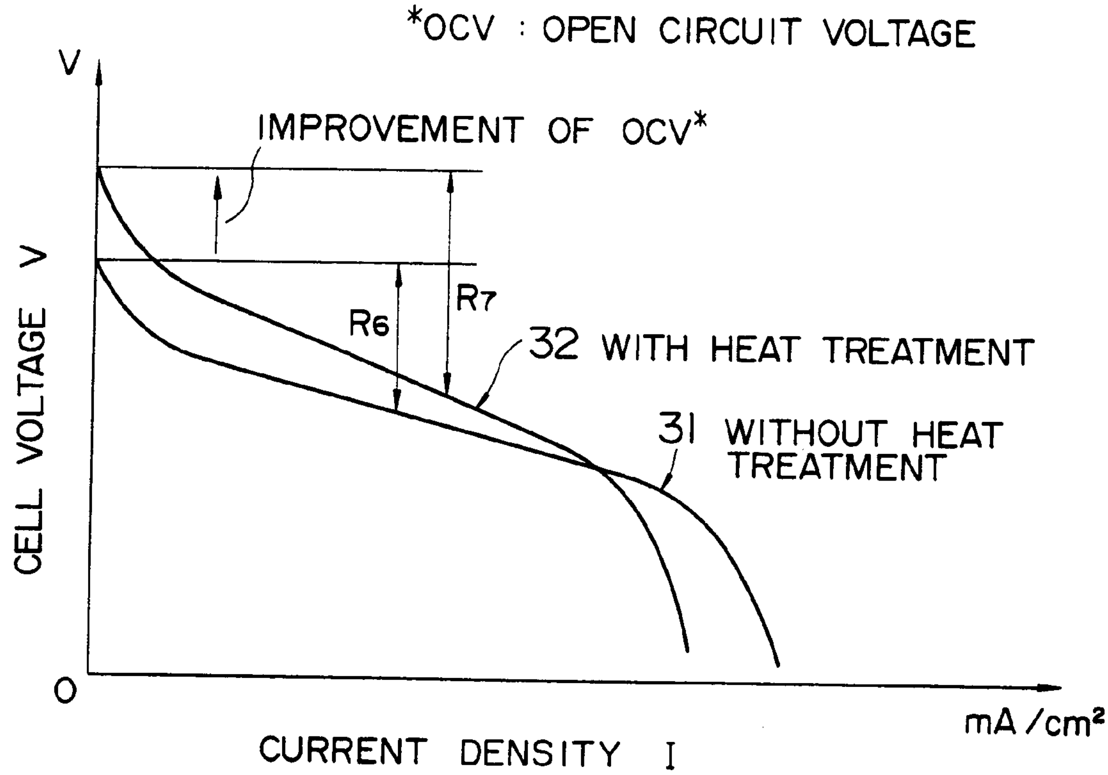
*OCV : OPEN CIRCUIT VOLTAGE
V
IMPROVEMENT OF OCV*
R7
R6
32 WITH HEAT TREATMENT
31 WITHOUT HEAT TREATMENT
CELL VOLTAGE V
0
mA/cm2
CURRENT DENSITY I

F I G. 7

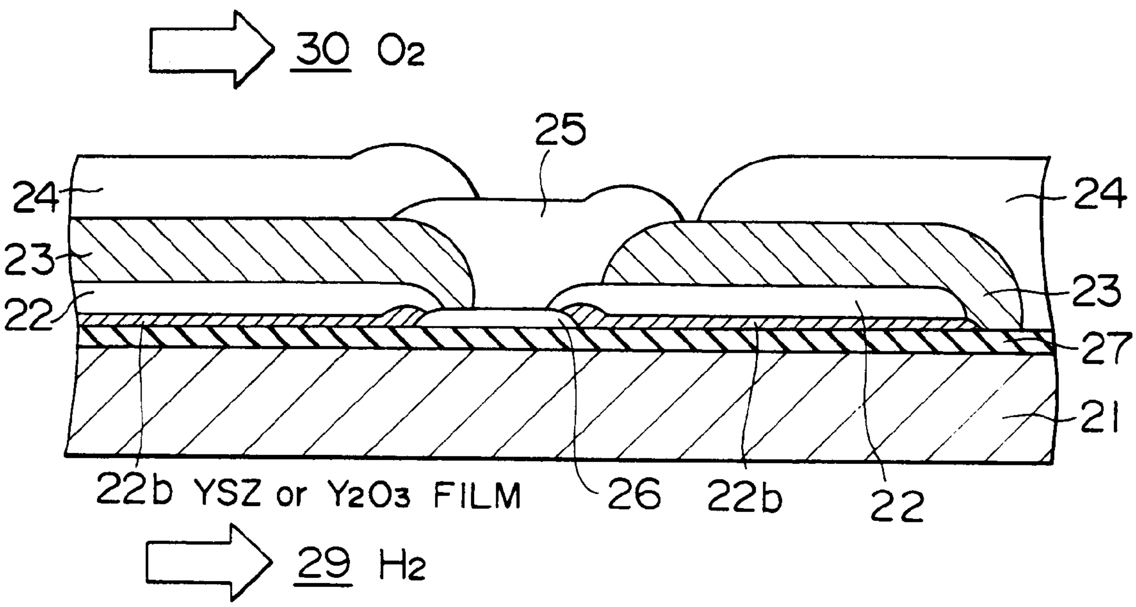

FIG. 8

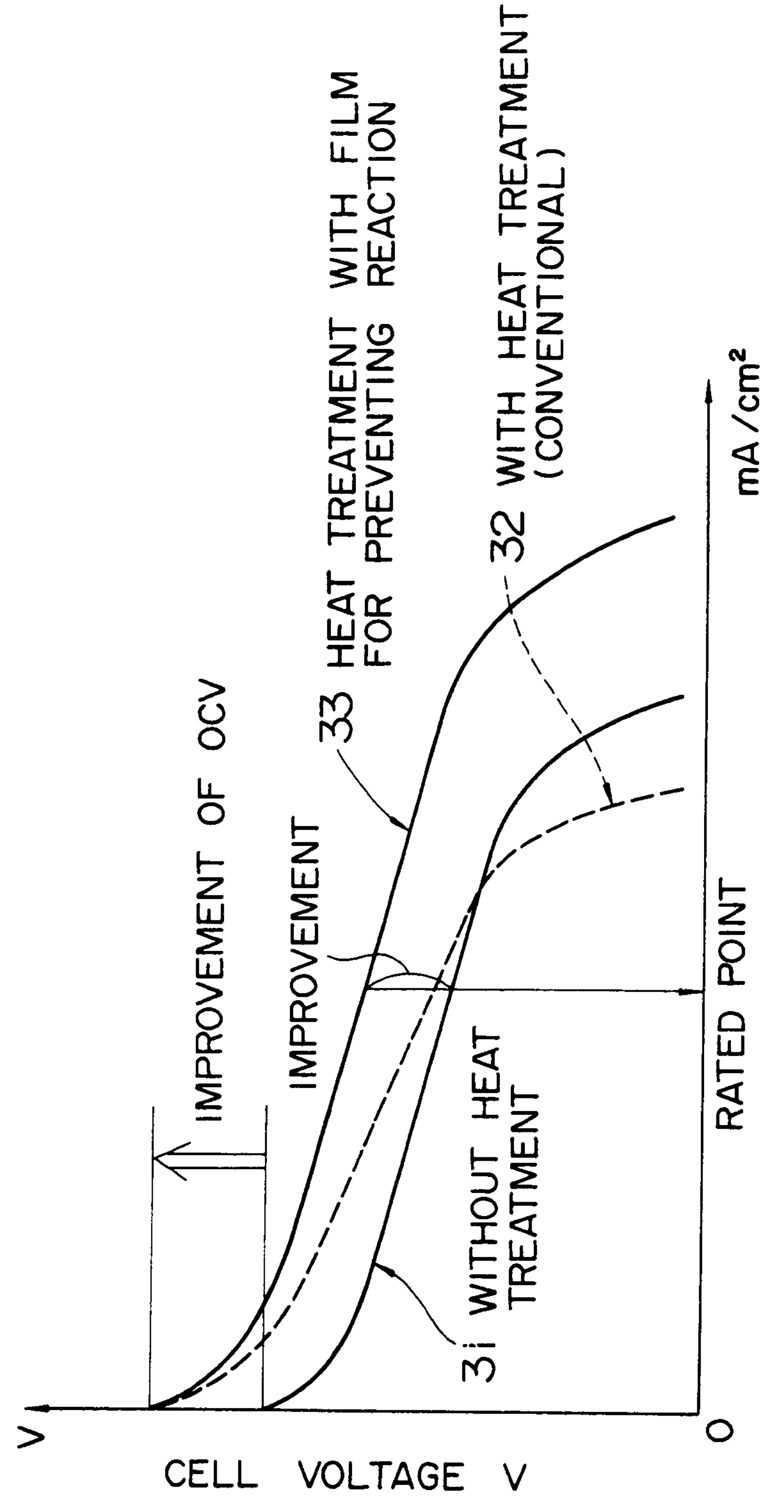
IMPROVEMENT OF OCV
IMPROVEMENT
33 HEAT TREATMENT WITH FILM FOR PREVENTING REACTION
32 WITH HEAT TREATMENT (CONVENTIONAL)
31 WITHOUT HEAT TREATMENT
V
CELL VOLTAGE V
0
RATED POINT
CURRENT DENSITY I
mA/cm²

FIG. 9

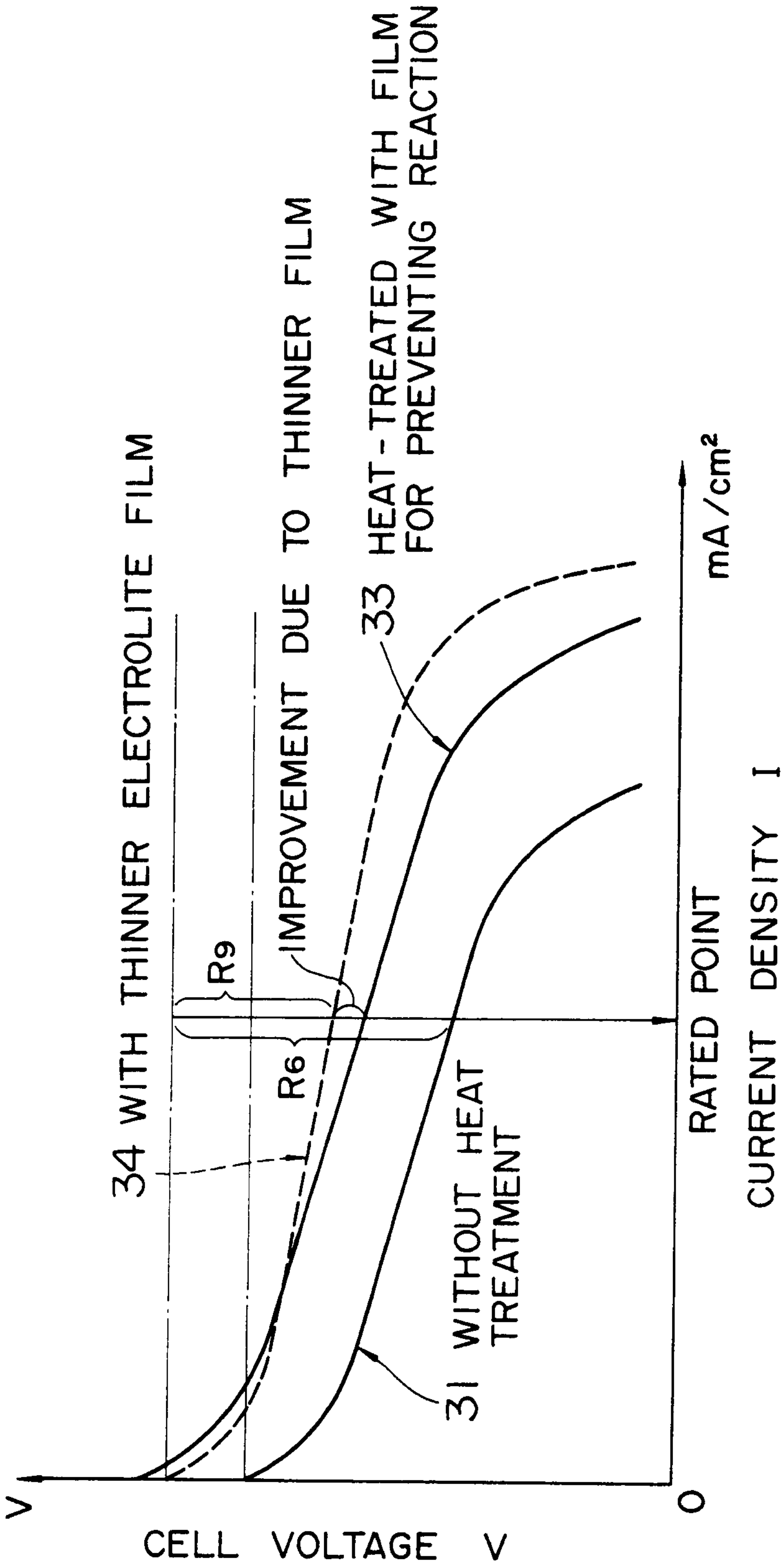
34 WITH THINNER ELECTROLITE FILM
IMPROVEMENT DUE TO THINNER FILM
33 HEAT-TREATED WITH FILM FOR PREVENTING REACTION
R9
R6
31 WITHOUT HEAT TREATMENT
RATED POINT
CURRENT DENSITY I
mA/cm²
V
0
CELL VOLTAGE V

F I G. 10

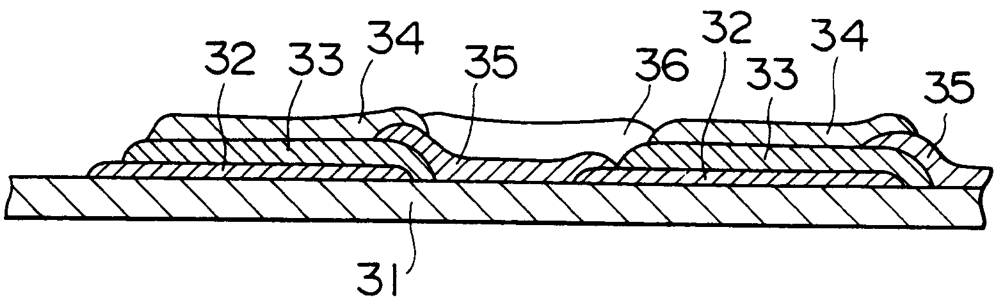


F I G. 11(a)

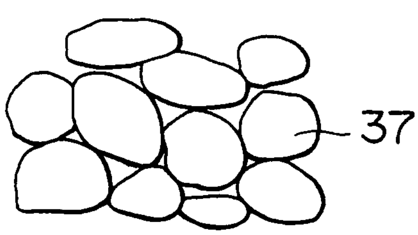


F I G. 11(b)

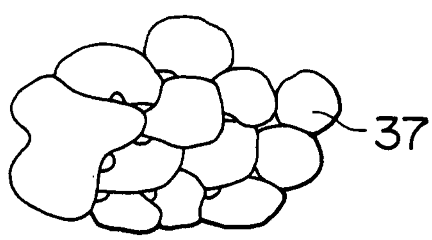

F I G. 12

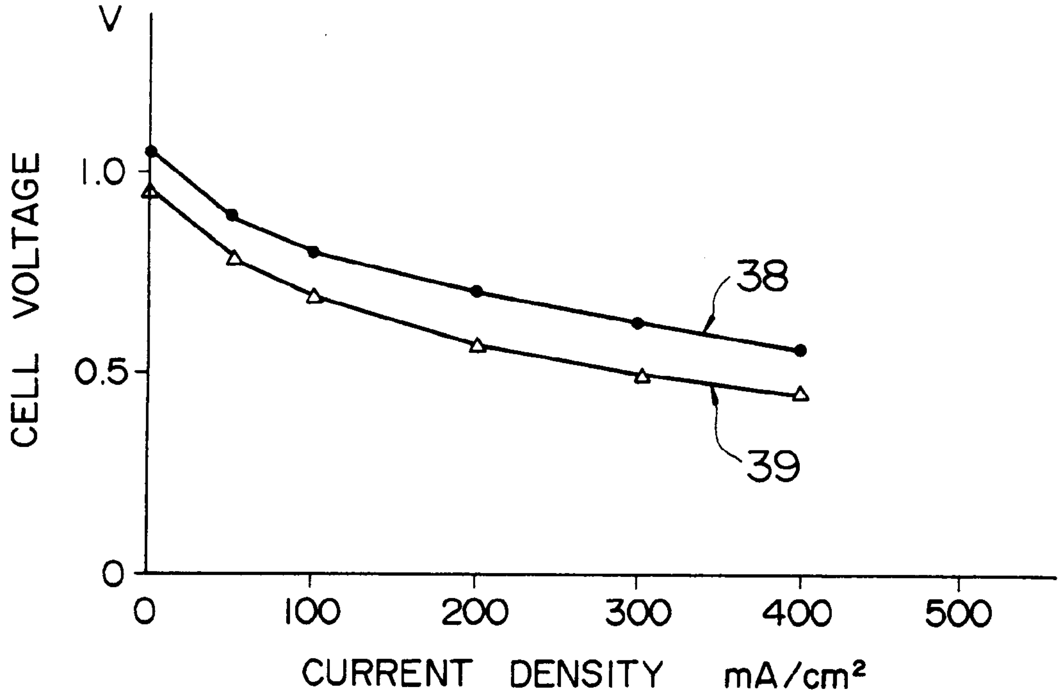


F I G. 13
BACKGROUND ART

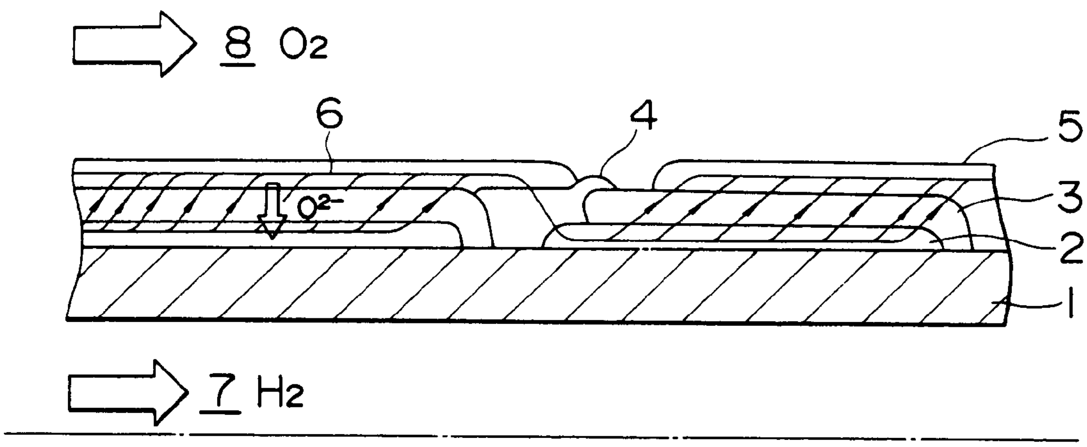

FIG. 14
BACKGROUND ART

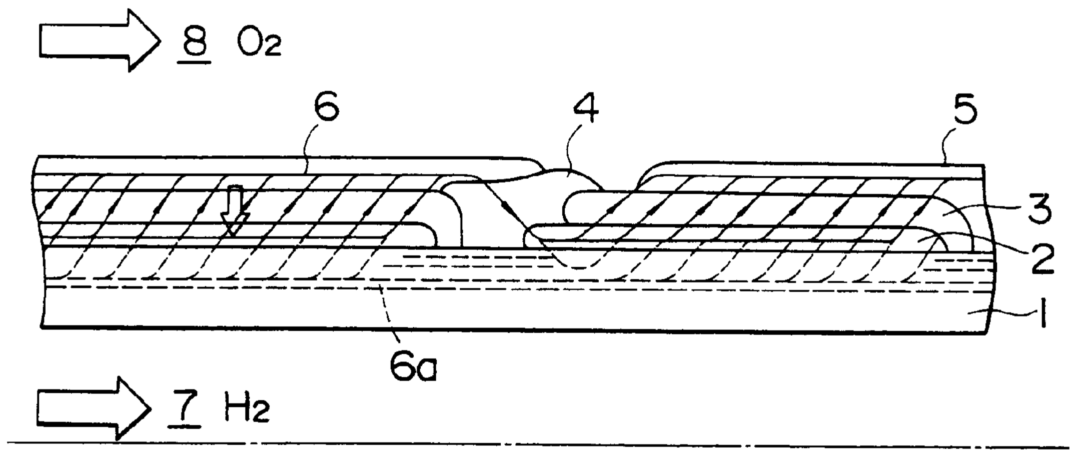


FIG. 15
BACKGROUND ART

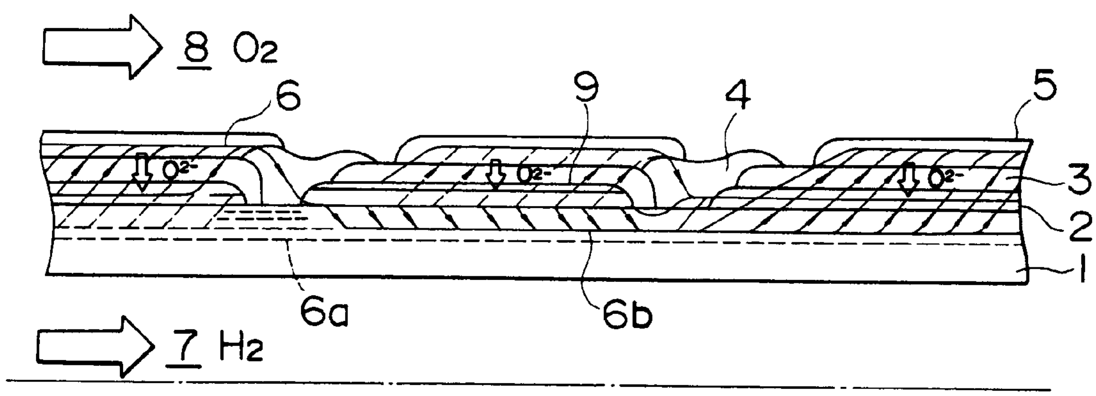

F I G. 16
BACKGROUND ART

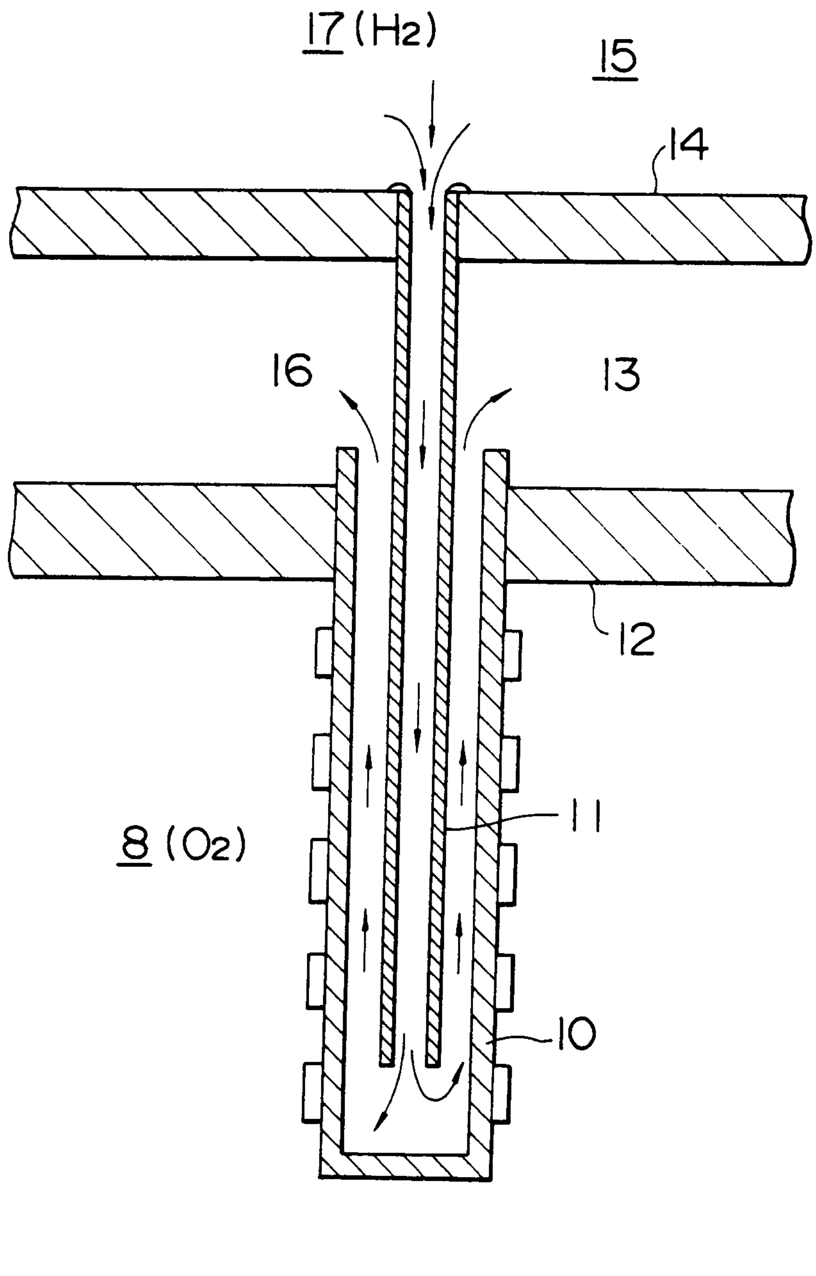

F I G. 17

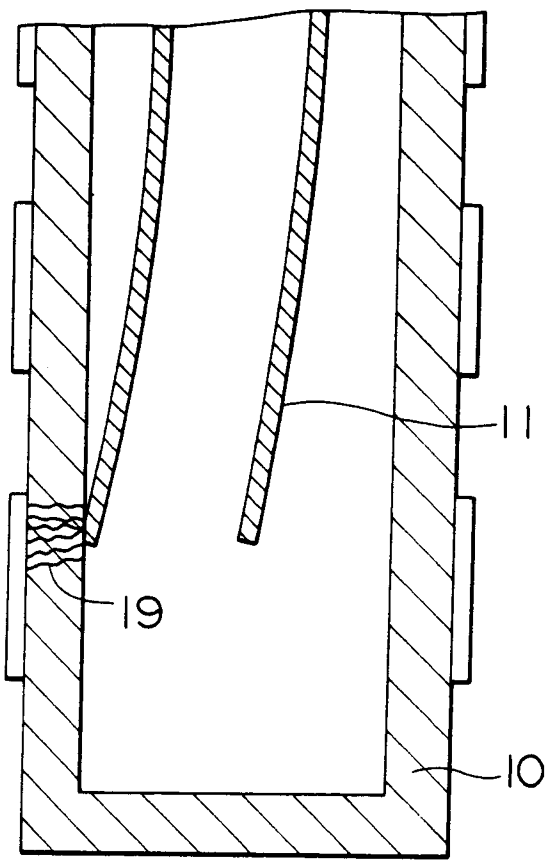

European Patent Office

# EUROPEAN SEARCH REPORT

Application Number

EP 92 30 4845

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 525 646 (H. TANNENBERGER ET ALL)<br>* column 6, line 15 - line 27; claims 1,6-8 *<br>* column 6, line 46 - line 55 * | 1,2,5,8, 10 | H01M8/12<br>H01M8/24<br>C25B1/04 |
| X | DE-A-1 922 970 (WESTINGHOUSE ELECTRIC CORP.)<br>* claims 1,11-14 *<br>* page 8, last paragraph *<br>* page 13, paragraph 2 * | 1,2,5,10 | |
| X | FR-A-2 347 783 (BROWN, BOVERI & CIE AKTGES.)<br>* page 8, line 15 - line 20 *<br>* page 9, line 13 - line 15 *<br>* page 5, line 11 - line 14 *<br>* page 7, line 5 - line 8 * | 2,5,8,10 | |
| X | FR-A-2 182 650 (SOC. ANONYME AUTOMOBILES CITROEN )<br>* page 5, line 11 - line 24; figure 7 * | 1,2,5 | |
| X | PATENT ABSTRACTS OF JAPAN<br>vol. 15, no. 175 (E-106)2 May 1991<br>& JP-A-03 040 375 ( MITSUBISHI ELECTRIC CORP. ) 21 February 1991<br>* abstract * | 2 | TECHNICAL FIELDS SEARCHED (Int. Cl.5)<br>H01M<br>C25B |

The present search report has been drawn up for all claims

| Place of search | Date of completion of the search | Examiner |
|---|---|---|
| THE HAGUE | 10 SEPTEMBER 1992 | D'HONDT J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)